# DEMANDE DE BREVET EUROPEEN

(11) **EP 3 312 479 A1**
(43) Date de publication de la demande: **25.04.2018**
(21) Numéro de dépôt: 17195057.9
(22) Date de dépôt: 05.10.2017
(51) Int. Cl.: F16H 63/30, F16H 61/24

(54) **LEVIER DE PASSAGE ET DE SELECTION DES VITESSES DANS UNE BOITE DE VITESSES D'UN VEHICULE AUTOMOBILE**

(30) Priorité: 24.10.2016 FR 1660267
(71) Demandeur: DURA Automotive Holdings U.K., Ltd., Birmingham, B35 7AG (GB)
(72) Inventeur: MAITRE, Sébastien, 43120 MONISTROL SUR LOIRE (FR); NOGIER, Joris, 42400 SAINT-CHAMOND (FR)
(74) Mandataire: Cabinet Laurent & Charras

(57) **Abrégé**

Le levier de passage et de sélection des vitesses dans une boîte de vitesses mécanique d'un véhicule automobile est remarquable en ce qu'il est constitué de deux tiges (4, 5) en alignement coaxial, séparées par un organe de billage (6) s'étendant perpendiculairement et emmanché dans un insert (7), l'organe de billage (6) est destiné à coopérer avec une came (13) pour indexer différentes positions du levier (1), les tiges (4, 5) et l'insert (7) sont rendus solidaires par un surmoulage (10) en matière plastique.

## Description

L'invention se rattache au secteur technique des boîtes de vitesses mécaniques pour véhicules automobiles.

Plus particulièrement, l'invention concerne un levier perfectionné de passage et de sélection des vitesses.

Il est connu de l'état de la technique un levier de passage et de sélection de vitesses pour une boîte de vitesses automobile, comprenant, d'une manière générale, une tige métallique sur laquelle différents éléments sont soudés, tel que par exemple un doigt de passage apte à coopérer avec une encoche d'une crosse sélectionnée, et un organe d'indexage présentant des faces opposées avec des profils en came pour permettre un indexage de différentes positions du levier en faisant office de piste de billage pour deux organes de billage.

Le levier comprend, en outre, un boîtier, comprenant intérieurement deux organes de billage, apte à venir coiffer une partie de la tige métallique et de l'organe d'indexage, pour faire coopérer les organes de billage avec les organes d'indexage.

La conception du levier et du boîtier selon l'état de la technique est complexe car elle nécessite l'utilisation de pièces mécanosoudées, et implique des étapes d'emboutissage de tôle, d'usinage, de découpe, de soudure laser, et de traitement anticorrosion de la tige.

Ainsi, pour être compétitifs à la vente, les machines permettant de fabriquer ces différentes pièces doivent être amorties comptablement pour minimiser et maîtriser les coûts de production.

L'invention vise à proposer un levier perfectionné de passage et de sélection des vitesses, dont la conception est simplifiée, et qui ne nécessite pas de lourds investissements pour sa fabrication, de sorte que le coût de revient d'un tel levier est minimisé et compétitif.

Pour ce faire, il a été conçu et mis au point un levier de passage et de sélection des vitesses dans une boîte de vitesses mécanique d'un véhicule automobile, remarquable en ce qu'il est constitué de deux tiges en alignement coaxial. Les deux tiges sont séparées l'une de l'autre par un organe de billage s'étendant perpendiculairement par rapport aux tiges. L'organe de billage est emmanché dans un insert, de préférence métallique, et est destiné à coopérer avec une came pour réaliser un indexage de différentes positions du levier. Les tiges et l'insert métallique sont rendus solidaires par un surmoulage en matière plastique.

De cette manière, la conception est simplifiée. Le nombre de pièces nécessaires à la fabrication du levier a été diminué, et des étapes de soudage ont été supprimées. Les différentes pièces sont assemblées et fixées ensemble par un surmoulage en matière plastique, réalisé en une seule opération. Du fait que le levier comprend deux tiges, seule la tige destinée à être en contact à l'extérieur subie un traitement anticorrosion, ce qui permet de diminuer davantage les coûts de revient par rapport à l'état de la technique où la tige entière devait subir le traitement anticorrosion.

Selon une forme de réalisation particulière, l'organe de billage comprend une douille et une bille logée dans la douille, et maintenue en saillie à une extrémité de celle-ci. La douille de l'organe de billage est emmanchée dans l'insert métallique.

De préférence, l'une des tiges comprend au moins un doigt de passage faisant saillie transversalement et fixé sur la tige par surmoulage d'une matière plastique. D'une manière avantageuse, un seul surmoulage permet de solidariser les tiges, l'insert métallique et le ou les doigts de passage.

Par ailleurs, et selon une autre caractéristique de l'invention, un doigt de sélection est rendu solidaire du levier par le surmoulage de l'insert métallique, le doigt de sélection étant destiné à coopérer avec une grille pour faire office de butée pour différentes positions du levier.

Selon une forme de réalisation particulière, le levier comprend un boîtier adapté pour s'emmancher autour de l'une des tiges et venir coiffer l'organe de billage. Le boîtier comprend intérieurement la came pour faire office de piste de billage pour l'organe de billage et permettre l'indexage de différentes positions du levier, et une grille pour coopérer avec le doigt de sélection.

D'autres avantages et caractéristiques de l'invention ressortiront mieux de la description qui va suivre, donnée à titre d'exemple non limitatif, du levier de sélection et de passage des vitesses selon l'invention, à partir des dessins annexés dans lesquels :
- la figure 1 est une vue en perspective du levier de passage et de sélection des vitesses selon l'invention ;
- la figure 2 est une vue en perspective similaire à celle de la figure 1, le boîtier du levier ayant été retiré ;
- la figure 3 est une vue en perspective similaire à celle de la figure 2, le levier ayant été représenté en coupe longitudinale ;
- la figure 4 est une vue similaire à celle de la figure 3, illustrant en détail le surmoulage d'insert recevant l'organe de billage et du doigt de passage, et la coopération de l'organe de billage avec la came du boîtier.

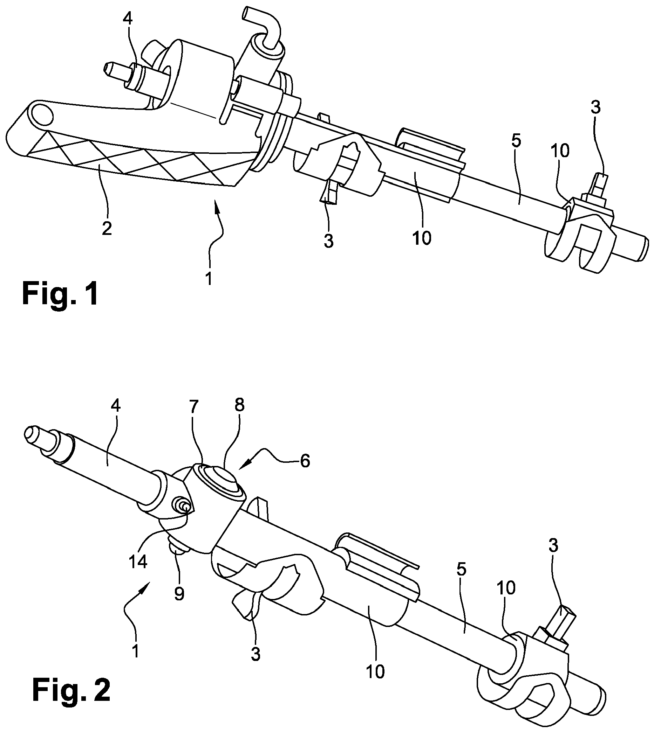

Selon l'invention, et en référence aux figures 1 et 2, le levier (1) de passage et de sélection des vitesses pour une boîte de vitesses manuelle d'un véhicule automobile est surmonté d'un boîtier (2) et comprend des doigts de passage (3) en saillie, dont la fonction, bien connue de l'état de la technique, est de coopérer avec une encoche d'une crosse coopérant avec une fourchette pour la commande en translation d'un baladeur pour le changement d'une vitesse.

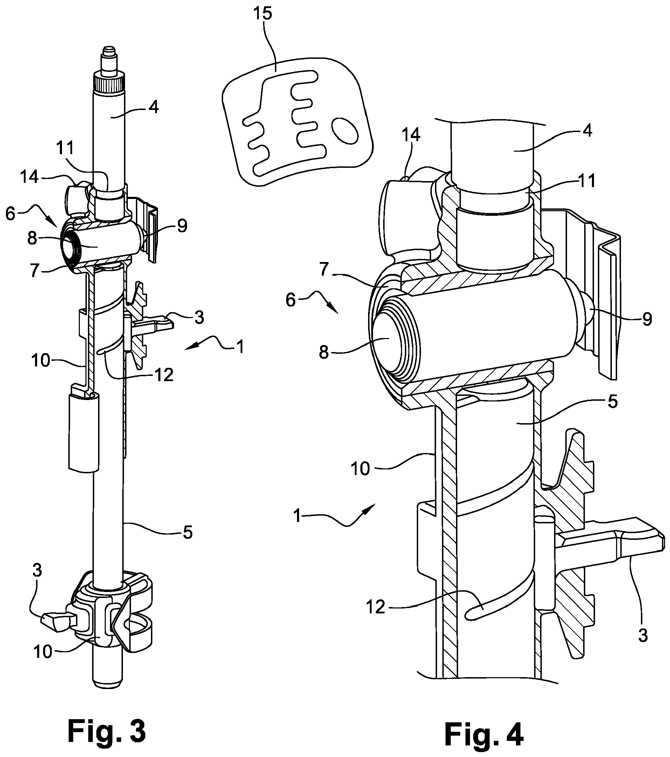

Plus précisément, et en référence aux figures 3 et 4, le levier (1) est constitué de deux tiges (4, 5) en alignement coaxial et séparées l'une de l'autre par un organe de billage (6) qui s'étend perpendiculairement par rapport aux deux tiges (4, 5).

L'organe de billage (6) est emmanché dans un insert (7), de préférence métallique et cylindrique, ouvert au moins à l'une de ses extrémités. L'organe de billage comprend une douille (8) recevant intérieurement une bille (9) maintenue en saillie à l'extrémité de la douille (8), par exemple par un ressort disposé à l'intérieur de la douille (8). L'organe de billage (6) est agencé de sorte que la bille (9) fasse saillie de l'extrémité ouverte de l'insert (7).

Les deux tiges (4, 5), l'insert (7) cylindrique de l'organe de billage (6) et l'un ou les deux doigts de passage (3) sont surmoulés ensemble et rendus solidaires par un surmoulage (10) en matière plastique. Dans la forme de réalisation illustrée, un seul doigt de passage (3) est surmoulé avec l'insert (7) et les deux tiges (4, 5), l'autre doigt de passage (3) est surmoulé indépendamment avec seulement l'une des tiges (5).

Le surmoulage (10) permet de réaliser l'assemblage et le centrage des pièces en une seule étape. Le surmoulage (10) permet de réaliser d'autres fonctions, telle que par exemple la réception de tôles d'inter-verrouillage et de contact.

Les tiges (4, 5) comprennent des motifs en creux ou en relief pour permettre une bonne tenue du surmoulage (10). La tige (4) comprend, par exemple, une gorge annulaire (11) et la tige (5) comprend par exemple une gorge hélicoïdale (12) dans lesquelles de la matière plastique est destinée à venir se loger lors du surmoulage pour améliorer la tenue.

L'une des tiges (4) et l'organe de billage (6) sont coiffées par le boîtier (2) qui est emmanché autour de ladite tige (4). Le boîtier (2) comprend intérieurement une plaque métallique profilée en came (13), qui est positionnée face à la bille (9) de l'organe de billage (6) de sorte que la bille (9), qui déborde de l'insert (7), vienne en appui sur la came (13) pour transmettre une force élastique sur ladite came (13) qui est profilée pour faire office de piste de billage et permettre l'indexage de différentes positions du levier (1).

En référence aux figures 2, 3 et 4, le levier (1) comprend également un doigt de sélection (14), surmoulé avec les tiges (4, 5) et l'insert (7) pour faire saillie transversalement au niveau de la partie coiffée par le boîtier (2). Le boîtier (2) comprend intérieurement une grille (15) apte à recevoir en engagement le doigt de sélection (14) pour former des butées pour les différentes positions du levier (1).

Le surmoulage plastique selon l'invention permet de diminuer le nombre de pièces nécessaires à la fabrication du levier (1), de s'affranchir d'opérations de soudage, et d'assembler les différentes pièces en une seule opération. L'invention fournit un levier (1) de conception simple, sûre et rationnelle permettant de diminuer les coûts de revient du levier (1).

## Revendications

1. Levier (1) de passage et de sélection des vitesses dans une boîte de vitesses mécanique d'un véhicule automobile, ***caractérisé* en ce qu'**il est constitué de deux tiges (4, 5) en alignement coaxial, séparées par un organe de billage (6) s'étendant perpendiculairement et emmanché dans un insert (7), l'organe de billage (6) est destiné à coopérer avec une came (13) pour indexer différentes positions du levier (1), les tiges (4, 5) et l'insert (7) sont rendus solidaires par un surmoulage (10) en matière plastique.

2. Levier (1) selon la revendication 1, ***caractérisé* en ce que** l'organe de billage (6) comprend une douille (8) recevant intérieurement une bille (9) maintenue en saillie à une extrémité de la douille (8).

3. Levier (1) selon la revendication 1, ***caractérisé* en ce que** l'une des tiges (5) comprend au moins un doigt de passage (3) faisant saillie transversalement et fixé sur la tige (5) par le surmoulage (10).

4. Levier (1) selon la revendication 1, ***caractérisé* en ce qu'**un doigt de sélection (14) est rendu solidaire du levier (1) par le surmoulage (10) de l'insert (7), le doigt de sélection (14) étant destiné à coopérer avec une grille (15) pour faire office de butée pour différentes positions du levier (1).

5. Levier (1) selon la revendication 4, ***caractérisé* en ce que** le levier (1) comprend un boîtier (2) adapté pour s'emmancher autour de l'une des tiges (4) et venir coiffer l'organe de billage (6), le boîtier (2) comprenant intérieurement la came (13) pour faire office de piste de billage pour l'organe de billage (6) et permettre l'indexage de différentes positions du levier (1), et une grille (15) pour coopérer avec le doigt de sélection (14).
